# EUROPEAN PATENT APPLICATION

(11) **EP 1 745 946 A2**
(43) Date of publication of application: **24.01.2007**
(21) Application number: 06117333.2
(22) Date of filing: 17.07.2006
(51) Int. Cl.: B60C 11/00, B60C 1/00

(54) **Tire with tread of cap/semibase construction**

(30) Priority: 22.07.2005 US 187516
(71) Applicant: THE GOODYEAR TIRE & RUBBER COMPANY, Akron, Ohio 44316-0001 (US)
(72) Inventor: Lafrique, Michel Maurice, D-63571, Gelnhausen (DE); Steiner, Uwe, D-63796, Kahl (DE); Holzel, Michael, D-63512, Hainburg (DE)
(74) Representative: Kutsch, Bernd

(57) **Abstract**

The present invention is directed to a pneumatic tire (1) comprising a composite tread band (2) disposed radially about a tire carcass; the composite tread band comprises a unitary semibase portion coextruded with at least one cap portion; the unitary semibase portion at its radially innermost extent axially spanning the composite tread band; the unitary semibase portion comprises at least one non-ground contacting zone (8A), and at least one ground-contacting zone (7, 7A, 7B) extending over from 20 to 80 percent of the axial span (15) of the tread band (2); the at least one cap portion being ground-contacting (7, 7A, 7B) and overlaying the at least one non-ground contacting zone (8A) of the unitary semibase portion.

## Description

### Background of the Invention

Pneumatic tires have commonly been constructed by applying an outer homogenous tread stock over a supporting carcass structure and vulcanizing the resulting composite structure. An outer matrix of grooves is molded or otherwise provided in the outer portions of this homogenous tread stock to provide traction as well as other desirable characteristics.

It is commonly known in the tire industry that certain tread compounds provide better traction than others. It is also commonly known that certain tread compounds provide better rolling resistance than others. Although a tire which has both low rolling resistance and a maximum amount of traction is desirable, a tread compound which provides good rolling resistance in a tire may not generally provide a maximum amount of traction, and a tread compound which provides a maximum amount of traction may not generally provide as low of rolling resistance as may be desired.
Pneumatic tires having treads of a running surface comprised of a silica-rich rubber composition, while sometimes desirable to impart various physical properties to the tire tread such as, for example reduced rolling resistance and suitable traction, may be disadvantageous because of the relatively high ratio of silica to carbon black in the reinforcing filler content. Such high silica/carbon black ratio represents a significant increase in cost of the silica-rich tread in terms of increased material cost (the silica) and increased cost of processing the silica-rich rubber composition. Further, such silica-rich tread rubber, with its minimal carbon black content, is of a relatively low electrical conductivity and is therefore electrically resistive to conducting static electricity from the tire tread to the ground.
Sometimes a path of increased electrical conductivity for a silica-rich tread may be provided, for example, by positioning a strip of a carbon black rich rubber composition either as a thin cover strip over a portion of the running surface of the tread or as a thin, non load bearing, strip extending through the body of the tread to its running surface. Methods of such type add both cost and complexity to the tire itself and to the manufacturing procedure for the tire.
Some tire treads are of a cap/base construction, with the tread cap designed to be ground-contacting with an outer surface of a lug/groove configuration, and with the tread base underlying and supporting the tread cap and positioned between the tread cap and the tire carcass. The tread base is not intended to be ground-contacting and, thus, not normally intended to have the same measure of tread properties as, for example, the tread cap typically desired properties of traction and treadwear.
While the tread cap, in a tread cap/base construction, is typically designed to be ground-contacting and, therefore, provide traction in combination with acceptable tread wear and rolling resistance, the underlying tread base is typically designed to fulfill an entirely different function and is not designed to be ground-contacting. In particular, it is typically desired that the tread base fulfill a function of transmitting multiaxial tread cap forces to the tire carcass, usually desirably with relatively low heat generation. These forces include forces resulting from the tread cap working under forces such as compression, bending and/or shear, all of which can cause heat generation and, thus, cause a temperature build-up, and, also cause the forces to impact on the tire carcass itself. Such forces can result, for example, from the tire's cornering, braking and various handling activities, all of which can generate heat build-up within the tire tread.

### Summary of the Invention

The present invention is directed to a pneumatic tire according to claim 1. Dependent claims refer to preferred embodiments of the invention.

### Brief Description of the Drawings

Figure 1 is a cross section of one embodiment a tire of the current invention.
Figure 2A is a cross section of one embodiment of a tire of the present invention having a tread band as shown.
Figure 2B is a cross section of one embodiment of a tire of the present invention having a tread band as shown.
Figure 2C is a cross section of one embodiment of a tire of the present invention having a tread band as shown.
Figure 2D is a cross section of one embodiment of a tire of the present invention having a tread band as shown.

### Description of the Invention

In US-A- 2004/0112490, in order to both reduce the material and fabrication cost of a silica-rich tread and to provide a path of increased electrical conductivity from the tire through its tread to the ground, it is envisioned that the tread running surface be divided into three distinct load bearing zones which include at least one silica-rich load bearing zone and at least one carbon black-rich load bearing zone of rubber compositions. By requiring the tread cap zones to be load-bearing, it is meant that each of the three distinct running surface tread cap zones extend from the outer surface of the tread to the underlying distinct carbon black-rich tread base rubber layer so that all of the load on the tire is communicated by each of the three tread cap layer zones directly to the tread base layer instead of directly to remainder of the tire carcass itself.

In the present invention, rather than having a distinct carbon black-rich tread base rubber layer, a semibase layer is used. By semibase layer, it is meant a unitary layer comprising at least one non-ground contacting zone, and at least one ground-contacting zone extending over from 20 to 80 percent of the axial span of the tread band. By unitary layer, it is meant that the semibase layer is constructed of a single rubber composition and is extruded as a profile including both the ground contacting zone or zones, and the non-ground contacting zone. The semibase is coextruded with the associated cap zones of a silica-rich rubber compound. Thus the semibase layer includes attributes characteristic of both a base layer and a cap layer, but is a unitary extrudate of a single rubber compound. Only part of the ground contacting surface of the tire comprises the ground contacting zone of the semibase layer; the remainder of the ground contacting surface of the tire comprises one or more cap portions made from a silica-rich rubber composition. The tread so constructed provides for electrical contact through the ground contacting region of the semibase layer to the non-ground contacting portion of the semibase layer and subsequently to the tire carcass. Further, the semibase provides for improved rolling resistance and traction, along with the traction provided by the one or more cap zones or silica-rich rubber.

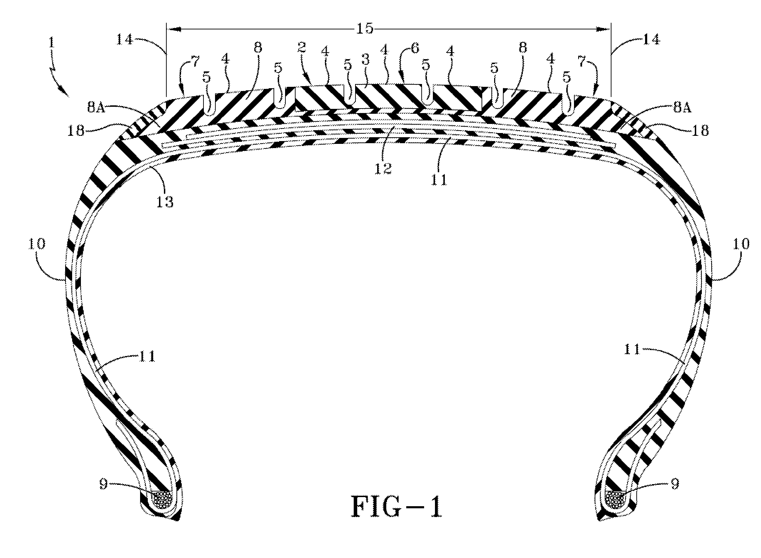

For a further understanding of this invention, FIG. 1 is provided as a partial cross-sectional view of a tire having a tread of a cap/semibase construction.

FIG. 1 depicts a tire 1 having a composite tread band 2 having a ground contacting region 3 of a lug 4 and groove 5 construction. The composite tread band 2 comprises a cap portion 6 and a semibase layer 8 including ground contacting zones 7 and non-ground contacting zone 8a spanning the composite tread band 2. The ground contacting region 3 thus includes cap portion 6 and semibase ground contacting zones 7. Tread wings 18 are disposed at each tire shoulder, adjacent to either terminus of tread band 2. Semibase layer 8 thus serves both a ground contacting function and as a transition zone between said tread cap portion 6 and remainder of the tire carcass plies 11 and rubber encapsulated belt layer 12, spaced apart relatively inextensible beads 9 carcass plies as rubber encapsulated fabric reinforced plies extending between said beads 9 and sidewalls 10 extending between said beads 9 and peripheral edges of said tread band 2 as well as a rubber innerliner layer 13.

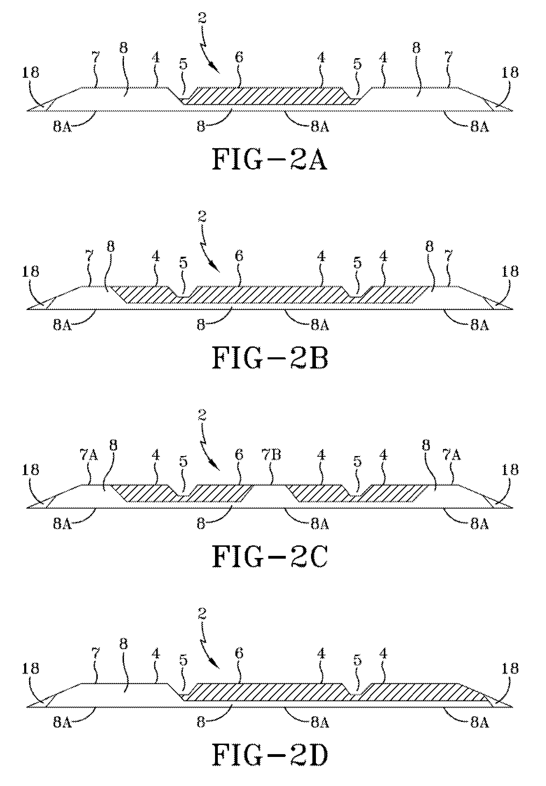

In the embodiment shown in Fig. 1, the ground contacting region 3 comprises three circumferential zones of rubber compositions comprising a cap portion 6 positioned between two semibase ground contacting zones 7. Alternative embodiments of the tread band 2 are shown in Figs. 2-A through 2-D. Fig. 2-A shows an embodiment wherein a symmetrical (with respect to radial centerline) tread band 2 substantially similar to that illustrated in Fig. 1, with the exception that fewer grooves 5 and lugs 4 shown for simplicity. Fig 2-B shows an embodiment wherein a symmetrical tread band 2 has a single, central cap portion 6 extending over a greater extent of the width of tread band 2, with two semibase ground contacting zones 7 disposed laterally on either side of cap portion 6. Fig. 2-C shows an embodiment wherein a symmetrical tread band 2 has two cap portions 6 disposed laterally on either side of a central semibase ground contacting zone 7B, with two lateral semibase ground contacting zones 7A disposed axially outward from cap portions 6. Fig. 2-D shows an embodiment wherein assymetrical tread band 2 has a single cap portion 6 diposed over a major portion of the tread band width, and a single semibase ground contacting zone 7 disposed over a minor portion of the tread band width.

Again referring to Fig. 1, the ground contacting zones 7 of the semibase layer 8 extend radially inward from the running surface 14-14 which is the spanned region 15 of the ground contacting zone 3 to the non-ground contacting portion 8a of semibase layer 8 and not directly to the remainder of the carcass plies 11 or carcass belt layer 12.

In particular, the cap portion 6 and semibase ground contacting zones 7 constitute the running surface of the tire normally intended to be ground contacting and normally extending between positions 14 as illustrated as spanning the region 15 of the ground contacting zone 3. In particular, for the purposes of this invention in order to more effectively describe and allocate the cap portion 6 and semibase ground contacting zones 7 of the ground contacting region 3, the running surface of the tire tread, to include the cap portion 6 and semibase ground contacting zones 7 is therefore intended to be the spanned region 15 to axially span across (include) the outer surfaces of the lugs 4 which are intended to be ground contacting and the associated grooves 5 between the respective lugs 4 even though the grooves 5 themselves are not normally intended to be ground contacting.

For the embodiment shown in Fig. 1 and Figs. 2A through 2D, the cap portion or portions 6 are depicted as constituting various fractions of the axially spanned running surface 15 of the tire tread band 2 and the semibase ground contacting zones 7, 7A, 7B are depicted as constituting various fractions of the axially spanned running surface 15 of the tire tread 2. Together, the fraction spanned by the cap portion or portions 6 and semibase ground contacting zones 7, 7A, 7B comprise the width of the tread band 2, with tread wings 18 diposed on either axial terminus of the tread band 2. In one embodiment, cap portion or portions may extend over from 20 to 80 percent of the axially spanned running surface of the tire. In another embodiment, cap portion or portions may extend over from 40 to 60 percent of the axially spanned running surface of the tire.

The cap portion or portions 6 and semibase 8 are coextruded using methods as are known in the art. In particular, semibase 8 is extruded as a unitary extrudate of a single rubber compound, and is co-extruded with cap portion or portions 6. Tread wings 18 may also be coextruded with cap portion 6 and semibase 8.

Co-extruded, multi-component rubber extrudates such as the coextruded semibase 8 and cap portion or portions 6 may conventionally be prepared by co-extruding at least two different rubber compositions by using an individual extruder for each rubber composition which individually cause an extruded rubber composition to flow through a suitable die member to, in turn cause the individual rubber compositions to controllably flow and join within the die member and exit therefrom in a profiled multi-component rubber extrudate. Thus semibase 8 would be extruded as a unitary extrudate of a single rubber compounds in one extruder, and cap portion or portions 6 would be extruded in one or more extruders. Such co-extrusion process to prepare a multi-component rubber extrudate for a tire, such as for example a tire tread, is well known to those having skill in such art. For example, see US-B- 5,453,238; US-B- 6,746,227; US-B- 6,821,106; and US-B- 6,478,564.

In one embodiment, the semibase layer comprises at least one conjugated diene-based elastomer and from 30 to 70 phr of rubber reinforcing filler selected from carbon black and precipitated silica wherein the filler comprises from about 30 to about 80 phr of said carbon black and from zero to 40 phr of precipitated silica. In another embodiment, the semibase layer comprises from 50 to 80 phr of carbon black. In another embodiment, the semibase layer comprises from 10 to 25 phr of precipitated silica. In one embodiment the rubber reinforcing filler in the semibase may be entirely rubber reinforcing carbon black. The semibase layer may further comprise additives such as curatives, processing aids, antidegradants, and the like.

The semibase layer may be characterized as having specific physical properties making it suitable for use in the tire. In one embodiment, the semibase layer has a tan delta ranging from 0.1 to 0.2, a storage modulus ranging from 4 to 13 MPa, and a shore A hardness ranging from 45 to 70. Tan delta and storage modulus E* may be measured by viscoelastic spectrometer at 70°C. Shore A hardness may be measured according to DIN 53505 at room temperature.

In one embodiment, the cap portion is comprised of at least one conjugated diene-based elastomer and reinforcing filler comprised of 50 to 80 phr of precipitated silica and from 10 to 40 phr of carbon black. The cap portion may further comprise additives such as curatives, processing aids, antidegradants, and the like.

The cap portion or portions may be characterized as having specific physical properties making it suitable for use in the tire. In one embodiment, the cap portion or portions has a tan delta ranging from 0.05 to 0.2, a storage modulus ranging from 4 to 12 MPa, and a shore A hardness ranging from 50 to 75. Tan delta and storage modulus E* may be measured by viscoelastic spectrometer at 70°C. Shore A hardness may be measured according to DIN 53505 at room temperature.

The present invention may be used with rubbers or elastomers containing olefinic unsaturation. The phrases "rubber" or "elastomer containing olefinic unsaturation" or "conjugated diene-based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition", "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include silicon-coupled and tin-coupled star-branched polymers. The preferred rubber or elastomers are polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

The relatively high styrene content of 30 to 45 for the E-SBR can be considered beneficial for a purpose of enhancing traction, or skid resistance, of the tire tread. The presence of the E-SBR itself is considered beneficial for a purpose of enhancing processability of the uncured elastomer composition mixture, especially in comparison to a utilization of a solution polymerization prepared SBR (S-SBR).

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

A purpose of using S-SBR is for improved tire rolling resistance as a result of lower hysteresis when it is used in a tire tread composition.

The 3,4-polyisoprene rubber (3,4-PI) is considered beneficial for a purpose of enhancing the tire's traction when it is used in a tire tread composition. The Tg refers to the glass transition temperature which can conveniently be determined by a differential scanning calorimeter at a heating rate of 10°C per minute.

The cis 1,4-polybutadiene rubber (BR) is considered to be beneficial for a purpose of enhancing the tire tread's wear, or treadwear. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may additionally contain a conventional sulfur containing organosilicon compound. Examples of suitable sulfur containing organosilicon compounds are of the formula:

Z Alk Sₙ Alk Z (II)

in which Z is selected from the group consisting of 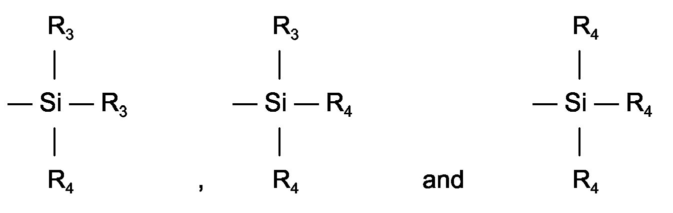 where R₃ is an alkyl group of 1 to 4 carbon atoms, cyclohexyl or phenyl; R₄ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

Specific examples of sulfur containing organosilicon compounds which may be used in accordance with the present invention include: 3,3'-bis(tricyclopentoxysilylpropyl) trisulfide, 2,2'-bis(tri-2²-methylcyclohexoxysilylethyl) tetrasulfide, and 3,3'-bis(dimethoxyphenylsilyl-2-methylpropyl) disulfide.

The preferred sulfur containing organosilicon compounds are the 3,3'-bis(trimethoxy or triethoxy silylpropyl) sulfides. The most preferred compounds are 3,3'-bis(triethoxysilylpropyl) disulfide and 3,3'-bis(triethoxysilylpropyl) tetrasulfide. Therefore as to formula II, preferably Z is 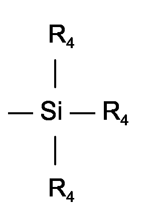 where R₄ is an alkoxy of 2 to 4 carbon atoms, with 2 carbon atoms being particularly preferred; alk is a divalent hydrocarbon of 2 to 4 carbon atoms with 3 carbon atoms being particularly preferred; and n is an integer of from 2 to 5 with 2 and 4 being particularly preferred.

The amount of the sulfur containing organosilicon compound of Formula II in a rubber composition will vary depending on the level of other additives that are used. Generally speaking, the amount of the compound of formula II will range from 0.5 to 20 phr. Preferably, the amount will range from 1 to 10 phr.

In the rubber of the present invention, conventional fillers such as silica and carbon black may be present in amounts as disclosed previously herein.

The commonly employed siliceous pigments which may be used in the rubber compound include conventional pyrogenic and precipitated siliceous pigments (silica), although precipitated silicas are preferred. The conventional siliceous pigments preferably employed in this invention are precipitated silicas such as, for example, those obtained by the acidification of a soluble silicate, e.g., sodium silicate.

Such conventional silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, Page 304 (1930).

The conventional silica may also be typically characterized by having a dibutylphthalate (DBP) absorption value in a range of 100 to 400, and more usually 150 to 300.

The conventional silica might be expected to have an average ultimate particle size, for example, in the range of 0.01 to 0.05 micron as determined by the electron microscope, although the silica particles may be even smaller, or possibly larger, in size.

Various commercially available silicas may be used, such as, only for example herein, and without limitation, silicas commercially available from PPG Industries under the Hi-Sil trademark with designations 210, 243, etc; silicas available from Rhone-Poulenc, with, for example, designations of Z1165MP and Z165GR and silicas available from Degussa AG with, for example, designations VN2 and VN3, etc.

Commonly employed carbon blacks can be used as a conventional filler. Representative examples of such carbon blacks include N110, N121, N220, N231, N234, N242, N293, N299, S315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. Representative examples of sulfur donors include elemental sulfur (free sulfur), an amine disulfide, polymeric polysulfide and sulfur olefin adducts. The sulfur vulcanizing agent may be used in an amount ranging from 0.5 to 8 phr. Typical amounts of tackifier resins, if used, comprise 0.5 to 10 phr. Typical amounts of processing aids comprise 1 to 50 phr. Such processing aids can include, for example, aromatic, naphthenic, paraffinic processing oils, and/or low PCA oils characterized by a polycyclic aromatic content of less than 3% (IP 346 method); such low PCA oils may include MES, TDAE, and heavy naphthenic oils. Typical amounts of antioxidants comprise 1 to 5 phr. Representative antioxidants may be, for example, diphenyl-p-phenylenediamine. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Typical amounts of peptizers comprise 0.1 to 1 phr. Typical peptizers may be, for example, pentachlorothiophenol and dibenzamidodiphenyl disulfide.

In one aspect of the present invention, the sulfur vulcanizable rubber composition is then sulfur-cured or vulcanized.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4. In another embodiment, combinations of a primary and a secondary accelerator might be used with the secondary accelerator being used in smaller amounts, such as from 0.05 to 3 phr, in order to activate and to improve the properties of the vulcanizate. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The ingredients are typically mixed in at least two stages, namely at least one non-productive stage followed by a productive mix stage. The final curatives including sulfur vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber may be mixed in one or more non-productive mix stages. The rubber composition containing the sulfur-containing organosilicon compound, if used, may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, the thermomechanical working may be from 1 to 20 minutes.

Vulcanization of the rubber composition of the present invention is generally carried out at conventional temperatures ranging from 100°C to 200°C. Any of the usual vulcanization processes may be used such as heating in a press or mold, heating with superheated steam or hot air or in a salt bath.

Tires of the present invention can be built, shaped, molded and cured by various methods which are known to those having skill in such art. As can be appreciated, the tire may be a passenger tire, aircraft tire, truck tire and the like. Preferably, the tire is a passenger tire. The tire may also be a radial or bias, with a radial tire being preferred.

The invention is further illustrated by the following nonlimiting examples.

### Example 1

Tires made with a tread construction according to Fig. 2-A was compared to tires having a conventional cap/base construction. A first comparison was made for treads made from rubber compounds suitable for summer use, and a second comparision was made for treads made from rubber compounds suitable for winter use. Normalized road test results are shown.

**SUMMER TIRE**

| | conventional tire (%) | semibase tire (%) |
|---|---|---|
| straightline | 100 | 104 |
| steering | 100 | 115 |
| stability | 100 | 109 |
| dry braking | 100 | 100 |
| wet handling | 100 | 111 |
| roll. resistance | 100 | 104 |

**WINTER TIRE**

| | conventional tire (%) | semibase tire (%) |
|---|---|---|
| straightline | 100 | 100 |
| steering | 100 | 108 |
| stability | 100 | 108 |

### Example 2.

A 205/55 R 16 tire having a tread construction according to Fig. 2-A was compared to a conventional tire having a conventional cap/base tread. The tire according to the invention including in the tread the following volume percentages: Cap : 35 % Base : 56 % Wings : 3 %

| Average results | Free - Base | Production |
|---|---|---|
| steering | 7.3 | 6.5 |
| stability | 7.2 | 6.6 |

### Example 3

A 205/55 R 16 tire having a tread construction according to Fig. 2-A was compared to a conventional tire having a conventional cap/base tread. The tire according to the invention including in the tread the following volume percentages: Cap : 32 % Base : 60 % Wings : 2.7 %

| Average results | Free - Base | Production |
|---|---|---|
| steering | 6.5 | 6.0 |
| stability | 6.6 | 6.1 |

## Claims

1. A pneumatic tire comprising a composite tread band (2) disposed radially outside of a tire carcass;
the composite tread band (2) comprising a unitary semibase portion (8) coextruded with at least one cap portion (6);
the unitary semibase portion (8) at its radially innermost extent axially spanning the composite tread band (2);
the unitary semibase portion (8) comprising at least one non-ground contacting zone (8A), and at least one ground-contacting zone (7, 7A, 7B) extending over from 20 to 80 percent of the axial span (15) of the tread band (2);
the at least one cap portion (6) being ground-contacting and overlaying the at least one non-ground contacting zone (8A) of the unitary semibase portion (8).

2. The pneumatic tire of claim 1, further comprising tread wings (18) diposed at each axial terminus of the tread band (2).

3. The pneumatic tire of claim 1 or 2, wherein:
the unitary semibase portion (8) comprises a rubber composition comprising at least one diene based elastomer and from 20 to 150 part by weight, per 100 parts by weight of elastomer, of carbon black; and
the at least one cap portion comprises a rubber composition comprising at least one diene based elastomer and from 20 to 100 parts by weight, per 100 parts by weight of elastomer, of silica.

4. The pneumatic tire of at least one of the previous claims, wherein:
the unitary semibase portion comprises a single non-ground-contacting zone (8A) disposed centrally in the tread band and two ground-contacting zones (7A, 7) each extending from 20 to 40 percent of the axial span (15) of the tread band (2) and disposed laterally on each side of the single non-ground-contacting zone (8A); and
a single cap portion (6) overlays the single non-ground-contacting zone (8A).

5. The pneumatic tire of at least one of the previous claims, wherein:
the unitary semibase portion comprises one ground contacting zone (7B) disposed centrally in the tread band, two non-ground-contacting zones (8A) disposed laterally on each side of and adjacent to the central ground contacting zone (7B), and two additional ground contacting zones (7, 7A) each disposed laterally of and adjacent to the non-ground contacting zones (8A); and
the at least one cap portion (6) comprises two cap portions, each cap portion overlying one of the non-ground-contacting zones of the unitary base portion.

6. The pneumatic tire of at least one of the previous claims, wherein:
the unitary semibase portion (8) comprises a single non-ground-contacting zone (8A) and a single ground-contacting zone (7); and
the at least one cap portion (6) comprises a single cap portions overlying the single non-ground-contacting zone (8A).

7. The pneumatic tire of at least one of the previous claims, wherein the unitary semibase portion (8) is a unitary extrudate that is coextruded with the at least one cap portion (6).

8. The pneumatic tire of at least one of the previous claims, wherein the unitary semibase portion (8) has a tan delta ranging from 0.1 to 0.2, a storage modulus ranging from 4 to 13 MPa, and a shore A hardness ranging from 45 to 70.

9. The pneumatic tire of at least one of the previous claims, wherein the at least one cap portion (6) has a tan delta ranging from 0.05 to 0.2, a storage modulus ranging from 4 to 12 MPa, and a shore A hardness ranging from 50 to 75.

10. A method of producing a pneumatic tire comprising a composite tread band (2) disposed radially about a tire carcass, wherein the composite tread band (2) comprise a unitary semibase portion (8) and at least one cap portion (6), the method comprising:
coextruding the unitary semibase portion (8) from a first rubber composition and at least one cap portion (6) from a second rubber composition, wherein the unitary semibase portion (8) is a unitary extrudate from a single extruder.
